# EUROPÄISCHE PATENTSCHRIFT

(11) **EP 0 867 337 B1**
(45) Veröffentlichungstag und Bekanntmachung des Hinweises auf die Patenterteilung: **08.02.2006**
(21) Anmeldenummer: 98104642.8
(22) Anmeldetag: 14.03.1998
(51) Int. Cl.: B60Q 1/42

(54) **Kraftfahrzeug-Lenkstockschalter**
Steering shaft switch for vehicle
Interrupteur de colonne de direction pour véhicule

(30) Priorität: 29.03.1997 DE 19713319
(43) Veröffentlichungstag der Anmeldung: 30.09.1998
(73) Patentinhaber: Delphi Technologies, Inc., Troy, MI 48084 (US)
(72) Erfinder: Ruegenberg, Roland, 55411 Bingen (DE); Khoury, Josef, Farmington Hills, MI 48331 (US)
(74) Vertreter: Becker, Bernd

(56) Entgegenhaltungen:
- GB-A- 1 232 846
- US-A- 5 385 067

## Beschreibung

Die Erfindung bezieht sich auf einen Kraftfahrzeug-Lenkstockschalter mit einem Fahrtrichtungsschalter, dessen Blinkerschalthebel um eine am Schaltergehäuse des Fahrtrichtungsschalters angeordnete Drehachse schwenkbar ist und dessen gehäuseseitiger Endabschnitt mit einem federbelasteten Rastelement versehen ist, das mit einer am Schaltergehäuse ausgebildeten Rastkurvenbahn zusammenwirkt und sich mit einem am Schaltergehäuse schwenkbar gelagerten Auslöser mit einem zur Lenksäule des Kraftfahrzeuges verjüngten Abschnitt für die Rückstellung des Blinkerschalthebels in Eingriff befindet.

An Kraftfahrzeug-Lenkstockschaltern sind in der Regel Fahrtrichtungsschalter angeordnet, die mit einem Blinkerschalthebel versehen sind. Von der "AUS"-Stellung ist dieser Blinkerschalthebel durch leichtes Betätigen in die der "AUS"-Stellung benachbarten Tippstellungen für die Fahrtrichtungsanzeigen "Rechts" bzw. "Links" bringbar, wobei beim Loslassen des Blinkerschalthebels dieser automatisch in die "AUS"-Stellung zurückgeführt wird. Beim kräftigeren Betätigen des Blinkerschalthebels in die Stellungen für Fahrtrichtungsanzeige "Rechts" bzw. "Links" rastet der Blinkerschalthebel in der jeweiligen Stellung ein. Wird das Lenkrad in die richtige Richtung gedreht, die der jeweiligen Blinkerschalthebelstellung und der gewünschten Fahrtrichtung entspricht, verbleibt der Blinkerschalthebel in dieser Stellung, bis das Lenkrad wieder in die entgegengesetzte Richtung gedreht wird.

Um die automatische Rückstellung des Blinkerschalthebels zu bewirken, wenn das Lenkrad aus der gewunschten Blinkerschalthebelstellung zurückgedreht wird, ist an der Lenkspindel des Lenkrades ein Nocken angeformt, der mit einem im Fahrtrichtungsschalter angeordneten Auslöser in Eingriff gelangt.

Aus der DE 31 46 271 C2 ist ein Kraftfahrzeug-Lenkstockschalter mit Rückstellung, insbesondere Fahrtrichtungsschalter bekannt, der in einem Gehäuse ein radial zur Lenksäule angeordnetes Führungselement aufweist, welches mit einer Druckfeder zur Lenksäule hin federbelastet ist. Ein Auslöser ist in dem Führungselement verschiebbar und drehbar gelagert und mittels einer Federeinrichtung zur Lenksäule ausgerichtet gehalten. Die Federeinrichtung ist hierbei mit ihrem einen Ende am Auslöser und mit ihrem anderen Ende am Führungselement befestigt. Ein am zur Lenksäule gerichteten Ende des Auslösers angeordneter verjüngter Abschnitt ist mit einem Nocken an der Lenksäule in Eingriff bringbar, wenn diese entgegengesetzt zur Fahrtrichtung, welche durch das Setzen des Blinkerschalthebels gewünscht ist, gedreht wird. Hierbei werden weitere, miteinander zusammenwirkende Teile betätigt und in der entsprechenden Rastmechanik eine Rückstellung des Blinkerschalthebels in die "AUS"-Stellung bewirkt. Nachdem der Nocken nach Eingriff mit dem Auslöser diesen freigegeben hat, wird der Auslöser durch die Federeinrichtung, die am Gehäuse des Fahrtrichtungsschalters und am Auslöser befestigt ist, wieder in die zur Achse der Lenksäule ausgerichtete Ruheposition zurückgedreht.

Darüber hinaus ist es bekannt, im Fahrtrichtungsschalter eine Rastkurve zum Arretieren des Blinkerschalthebels in die Fahrtrichtungsstellungen "Rechts" bzw. "Links" vorzusehen, wobei der Blinkerschalthebel mit einer federbelasteten Rastrolle versehen ist, die entlang der Rastkurve gleitet.
Ein solchen Fahrtrichtungsschalter ist auch aus US 5 385 067 bekannt.

Ein besonderer Nachteil bei diesen bekannten Lösungen ist, daß eine Vielzahl von einzelnen Bauteilen benötigt werden, die montiert werden müssen, wobei der Fertigungsaufwand und die Fertigungskosten sehr hoch sind. Dadurch wird der montierte und am Kraftfahrzeug-Lenkstockschalter angebrachte Fahrtrichtungsschalter sehr störanfällig. Durch Verschleiß und/oder Verklemmen der einzelnen Bauteile kommt es häufig zum Bruch des Auslösers beim Drehen des Lenkrades in seine Ausgangsstellung, so daß eine automatische Rückstellung des Blinkerschalthebels nicht mehr möglich ist. An die verwendeten Bauteile müssen hohe Qualitätsanforderungen gestellt werden, um das Spiel der Rastelemente zueinander zu begrenzen. Die bekannte Federeinrichtung besitzt eine hohe Elastizität, die in Verbindung mit dem Spiel der Rastbauteile oftmals zu einer unzuverlässigen Auslösung bzw. Rückstellung des Blinkerschalthebels führt. Dabei tritt häufig ein Verhaken des Auslösers auf.

Es ist Aufgabe der Erfindung, einen Kraftfahrzeug-Lenkstockschalter mit Fahrtrichtungsschalter mit Blinkerschalthebel der eingangs genannten Art zu schaffen, der durch Verwendung nur weniger Bauteile funktionell zuverlässig ist und bei dem die Herstellungskosten und der Fertigungs- und Montageaufwand erheblich gesenkt werden können.

Erfindungsgemäß wird die Aufgabe dadurch gelöst, daß der Auslöser
- eine Kurvenbahn, gegen die sich das federbelastete Rastelement des Blinkerschalthebels gleitbeweglich abstützt,
- ein Gleitelement, das mit einem am Endabschnitt des Blinkerschalthebels ausgebildeten Führungselement gleitbeweglich zusammenwirkt, und
- zwei zueinander beabstandete seitliche Aussparungen, die mit dazu korrespondierenden, am Schaltergehäuse ausgebildeten Ansätzen in Eingriff bringbar sind,

aufweist.

Ein besonderer Vorteil der Erfindung besteht darin, daß der Auslöser eine Reihe von funktionellen Merkmalen aufweist, so daß der Auslöser beispielsweise als Kunststoff-Formteil einstückig und leicht herstellbar ist. Ein Großteil der zu den funktionellen Merkmalen des Auslösers korrespondierenden und mit diesen in Eingriff bringbaren Merkmale sind in einem ebenfalls einstückig herstellbaren Gehäuseteil, beispielsweise aus Kunststoff, ausgebildet.

Bei Betätigung des Blinkerschalthebels kommt das daran angeordnete federbelastete Rastelement sowohl mit der am Schaltergehäuse ausgebildeten Rastkurvenbahn als auch mit der Kurvenbahn am Auslöser in Eingriff und bewirkt hierdurch die beiden Tippstellungen sowie die beiden Fahrtrichtungsstellungen "Rechts" bzw. "Links". Darüber hinaus erfolgt auf Grund des federbelasteten Rastelementes bei dessen Entlanggleiten an der Kurvenbahn des Auslösers im Zusammenwirken mit dem am Auslöser angeordneten Gleitelement und dem am Endabschnitt des Blinkerschalthebels ausgebildeten Führungselement ein Verschieben des Auslösers in radialer Richtung zur Lenksäule. Bei der Bewegung des Blinkerschalthebels in eine der Tippstellungen ist hierbei der Auslöser um einen zentralen Punkt drehbar, wobei der verjüngte Abschnitt des Auslösers nur soweit in radialer Richtung zur Lenksäule verschoben wird, daß der an der Lenksäule angebrachte Nocken nicht mit dem verjüngten Abschnitt des Auslösers in Eingriff kommen kann. In den Tippstellungen des Blinkerschalthebels ist somit das Lenkrad in beide Richtungen frei drehbar.

Wird der Blinkerschalthebel in eine der Fahrtrichtungsstellungen "Rechts" bzw. "Links" betätigt, bewirkt das Zusammenspiel des Gleitelementes am Auslöser und das Führungselement am Endabschnitt des Blinkerschalthebels ein weiteres Verschieben des Auslösers in radialer Richtung zur Lenksäule, bis das federbelastete Rastelement des Blinkerschalthebels in eine Rastposition der am Schaltergehäuse ausgebildeten Rastkurvenbahn einrastet. Der Auslöser ist nun um einen Punkt nahe seinem entsprechenden äußeren seitlichen Ende, auf welches der Endabschnitt des Blinkerschalthebels drückt, drehbar gelagert. Das gegenüberliegende äußere seitliche Endes des Auslösers ist hierbei in einem bestimmten Winkelbereich frei drehbar, wodurch zwangsläufig auch der verjüngte Abschnitt des Auslösers mitverschwenkt wird. Dabei erfährt der verjüngte Abschnitt des Auslösers bei Drehung des Lenkrades in die beabsichtigte richtige Richtung eine größere Auslenkung, so daß dieser nicht in Eingriff mit dem an der Lenksäule ausgebildeten Nocken kommen kann. Der Winkelbereich, in dem sich der Auslöser drehen kann, wird durch die am Auslöser angebrachten zwei zueinander beabstandeten seitlichen Aussparungen und deren Eingreifen mit den dazu korrespondierenden Ansätzen am Schaltergehäuse begrenzt. Durch die Verlagerung des Drehpunktes des Auslösers in dessen einen Seitenbereich bei Betätigung des Blinkerschalthebels, verschiebt sich der Winkelbereich asymmetrisch in die dem Drehpunkt des Auslösers entgegengesetzte Richtung. Wird das Lenkrad in die entgegengesetzte Richtung gedreht, kommt der Nocken der Lenksäule mit dem verjüngten Abschnitt des Auslösers in Eingriff und drückt diesen in seine Ausgangsstellung, wodurch der Blinkerschalthebel in seine Ausgangsstellung automatisch zurückgestellt wird, da die am Auslöser ausgebildete Kurvenbahn auf das federbelastete Rastelement des Blinkerschalthebels einwirkt. Da sich das Gleitelement am Auslöser und das Führungselement am Endabschnitt des Blinkerschalthebels nun in entgegengesetzter Richtung gleitend aneinander bewegen, wird zwangsläufig auch der Auslöser in seine Ausgangsstellung zurück bewegt. Der Drehpunkt des Auslösers wird dabei wieder zu dessen Mitte hin verschoben.

Zur Gewährleistung einer hohen Funktionalität und einer zuverlässigen Gleitbewegung zwischen dem federbelasteten Rastelement und der am Schaltergehäuse ausgebildeten Rastkurvenbahn sowie der am Auslöser angebrachten Kurvenbahn ist das federbelastete Rastelement vorzugsweise als Rastrolle ausgebildet. Bevorzugt ist hierbei, daß die Rastrolle an einem gleitbeweglichen Raststein angeordnet ist, der in einem im von der Drehachse des Schaltergehäuses hineinragenden Endabschnitt des Blinkerschalthebels ausgebildeten Führungskanal geführt und durch eine darin angeordnete Druckfeder gleitbeweglich belastet ist. Ein solcher federbelasteter Raststein bewirkt bei einem optimalen Spiel im Führungskanal des Blinkerschalthebels eine zuverlässige Gleitbewegung.

Um die verschiedenen Schaltstellungen des Blinkerschalthebels gewährleisten zu können, weist die am Schaltergehäuse ausgebildet Rastkurvenbahn einen mittleren Kurvenbahnbereich für die "AUS"-Stellung, sich beidseitig an den mittleren Kurvenbahnbereichen anschließende Kurvenbahnbereiche für die Tippstellungen und sich daran anschließende, mit Erhebungen versehene äußere Kurvenbahnbereiche für die Blinkerschaltstellungen des Blinkerschalthebels auf. Die Rastkurvenbahn besitzt somit eine leichte V-Form, wobei die äußeren Enden der Schenkel der V-Form mit den Rastungen für die Blinkerschalthebelstellungen "Rechts" bzw. "Links" versehen sind.

In weiterer Ausbildung der Erfindung ist vorgesehen, daß die Rastkurvenbahn am Schaltergehäuse eine Höhe aufweist, die etwa der halben Höhe der sich daran abstützenden Rastrolle entspricht. Um die Wirkung der Rastrolle zu vergrößern und diese vollständig auszunutzen, befindet sich die andere Hälfte der Rastrolle in Eingriff mit der am Auslöser ausgebildeten Kurvenbahn, deren Höhe somit etwa der halben Höhe der sich daran abstützenden Rastrolle entspricht.

Um den Eingriff mit der Rastrolle und deren Gleitbewegung zu ermöglichen, verläuft die am Auslöser ausgebildete Kurvenbahn an der von ihrem verjüngten Abschnitt weggerichteten rückwärtigen Stirnwand. Somit befindet sich die federbelastete, am Raststein angeordnete Rastrolle sowohl mit der Rastkurvenbahn am Schaltergehäuse als auch mit der Kurvenbahn am Auslöser in Eingriff, deren Zusammenspiel die zuvor erläuterte Funktionsweise hervorbringt.

Zweckmäßigerweise ist die Kurvenbahn des Auslösers im wesentlichen V-förmig und symmetrisch ausgebildet, wobei jeder Schenkel der V-Form einen ungleichförmigen Krümmungsverlauf aufweist. Diese Kurvenbahn, die in sich symmetrisch, jedoch an ihren Schenkeln mit einem ungleichformigen Krümmungsverlauf versehen ist, bewirkt in Verbindung mit der federbelasteten Rastrolle die Verschwenkbarkeit des Auslösers.

Nach einer Weiterbildung des Erfindungsgedankens ist zunächst vorgesehen, daß das am Auslöser ausgebildete Gleitelement an dessen Oberseite nockenartig angeformt ist und eine im wesentlichen Dreieckform aufweist, wobei eine Spitze der Dreieckform zun verjüngten Abschnitt des Auslösers gerichtet ist. Darüber hinaus ist vorgesehen, daß das am Endabschnitt des Blinkerschalthebels ausgebildete Führungselement an einem den Auslöser zumindest teilweise überdeckenden Vorsprung des Endabschnittes des Blinkerschalthebels nockenartig angeformt ist und eine im wesentlichen Dreieckform aufweist, wobei eine Spitze der Dreieckform entgegengesetzt zur Spitze der Dreieckform des am Auslöser ausgebildeten Gleitelementes gerichtet ist. In Ruheposition des Kraftfahrzeug-Lenkstockschalters befinden sich in der "AUS"-Stellung des Blinkerschalthebels die Spitzen der Dreieckformen des nockenartigen Gleitelementes und des Führungselementes unmittelbar gegenüber. Somit stehen das Gleitelement am Auslöser und das Führungselement am Endabschnitt des Blinkerschalthebels in dessen "AUS"-Stellung nicht in Eingriff. Erst wenn der Blinkerschalthebel in eine Richtung verschwenkt wird, wird durch die Einwirkung der federbelasteten Rastrolle mit der Kurvenbahn des Auslösers dieser in Richtung der Lenksäule gedrückt, so daß das Gleitelement des Auslösers und das Führungselement des Endabschnittes des Blinkerschalthebels in Eingriff gelangen. Die zueinander gerichteten Spitzen der Dreieckformen des Gleitelementes und des Führungselementes gleiten somit aneinander vorbei, wobei die nun zueinander benachbarten Seitenflächen der Dreieckformen aneinander gleiten und durch die Dreieckformen eine weitere Bewegung des Auslösers in radialer Richtung zur Lenksäule erzwungen wird.

In Weiterbildung der Erfindung sind die am Schaltergehäuse ausgebildeten Ansätze jeweils zur Längsachse des Schaltergehäuses geneigt, um eine im wesentlichen V-Form zu bilden, wobei der verjüngte Abschnitt des Auslösers zwischen diesen Ansätzen bewegbar ist. Dadurch sind die Ansätze an sich jeweils gegenüberliegenden Seiten des Schaltergehäuses ausgebildet, derweil der Bereich zwischen den Ansätzen als Auflagefläche für den verjüngten Abschnitt des Auslösers dient, auf der sich dieser in schwenkender und verschiebender Weise bewegt.

Des weiteren sind die Unterseitenfläche und die Oberseitenfläche des verjüngten Abschnittes des Auslösers um dessen Längsachse jeweils leicht V-förmig abgewinkelt ausgebildet, wobei die Unterseitenfläche und die Oberseitenfläche parallel zueinander verlaufen. Die durch die abgewinkelte Unterseitenfläche des verjüngten Abschnittes des Auslösers gebildete Kante ist als Kippachse für den Auslöser auf seiner Auflagefläche am Schaltergehäuse vorgesehen. Bei Betätigung des Blinkerschaithebels in eine der Fahrtstellungen "Rechts" oder "Links" wird der Auslöser um die an dessen Unterseite des verjüngten Abschnittes gebildete Kippachse gekippt und gleichzeitig der Drehpunkt des Auslösers auf die Seite verlagert, auf die der Endabschnitt des Blinkerschalthebels einwirkt. Dadurch gelangt die entsprechende Aussparung am Auslöser in Eingriff mit dem dazu korrespondierenden Ansatz am Schaltergehäuse, infolgedessen die Drehbewegung des Auslösers in einem bestimmten Winkelbereich begrenzt wird.

Jede der äußeren Seitenkanten der Aussparungen am Auslöser weist eine nockenartige Erhöhung auf. Diese nockenartige Erhöhung unterstützt den Eingriff der am Auslöser angebrachten Aussparung mit den dazu korrespondierenden Ansätzen am Schaltergehäuse.

Zur weiteren Bewegungsbegrenzung des Auslösers weist das Schaltergehäuse im Betatigungsbereich des Auslösers jeweils eine äußere seitliche Begrenzungswand auf.

Durch die Erfindung wird ein aus wenigen Bauteilen bestehender Kraftfahrzeug-Lenkstockschalter mit einem Fahrtrichtungsschalter mit Blinkerschalthebel zur Verfügung gestellt, dessen meisten Einzelteile vorzugsweise aus Kunststoff bestehen, die dadurch häufig in einem einzigen Arbeitsgang, beispielsweise durch Spritzgießen, gefertigt werden können. Darüber hinaus zeichnet sich der Fahrtrichtungsschalter durch einen erheblich geringeren Montageaufwand und hohe Zuverlässigkeit aus.

Die Erfindung wird nachfolgend an einem Ausführungsbeispiel mit Bezugnahme auf die zugehörigen Zeichnungen näher erläutert. In den Zeichnungen zeigen
- Fig. 1: eine Draufsicht auf den erfindungsgemäßen Kraftfahrzeug-Lenkstockschalter mit Fahrtrichtungsschalter und Blinkerschalthebel,
- Fig. 2: eine Seitenansicht des Kraftfahrzeug-Lenkstockschalters nach Fig. 1,
- Fig. 3: einen Schnitt entlang der Linie A-A nach Fig. 2,

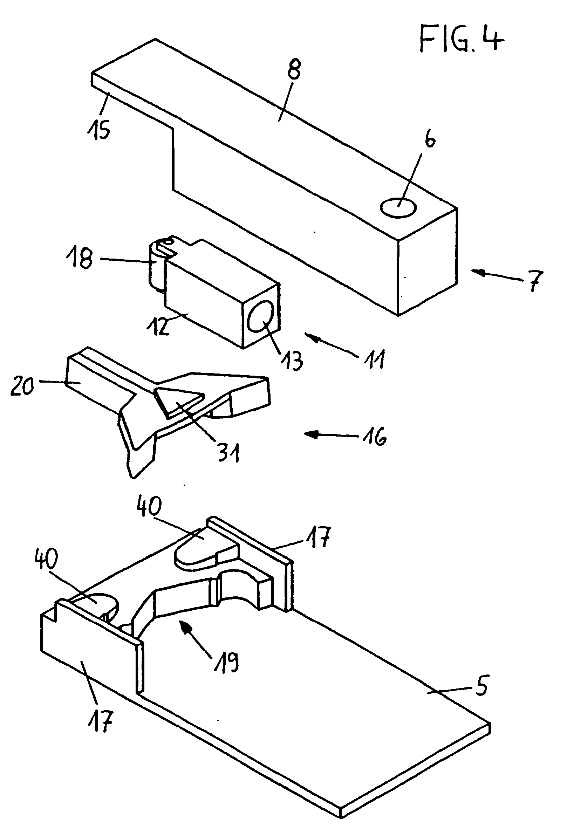

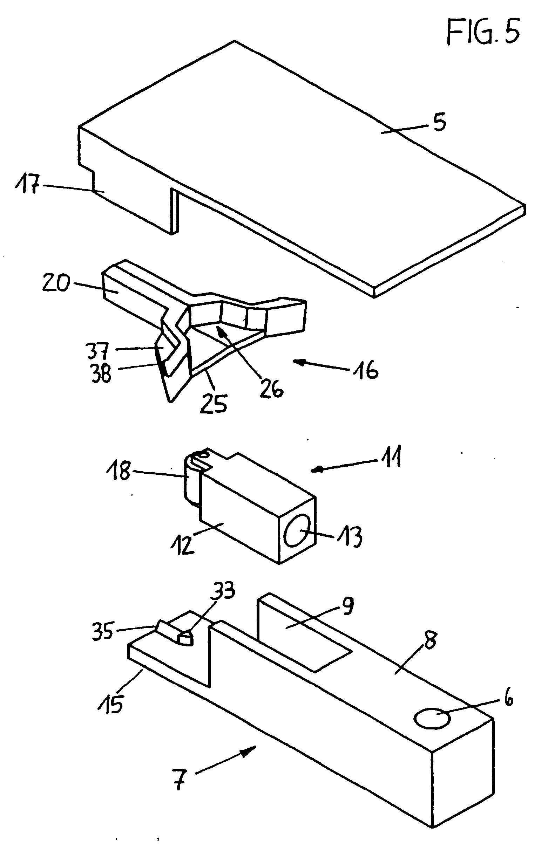

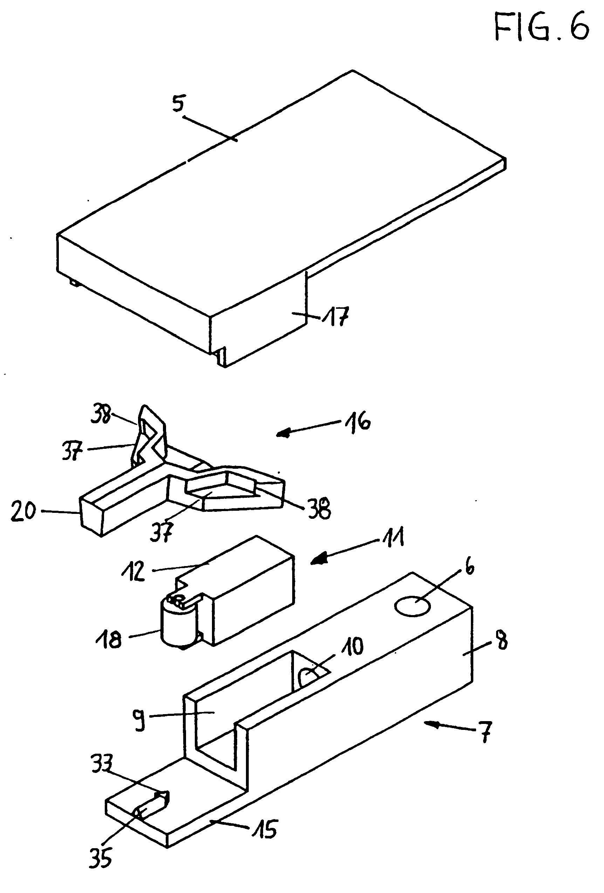

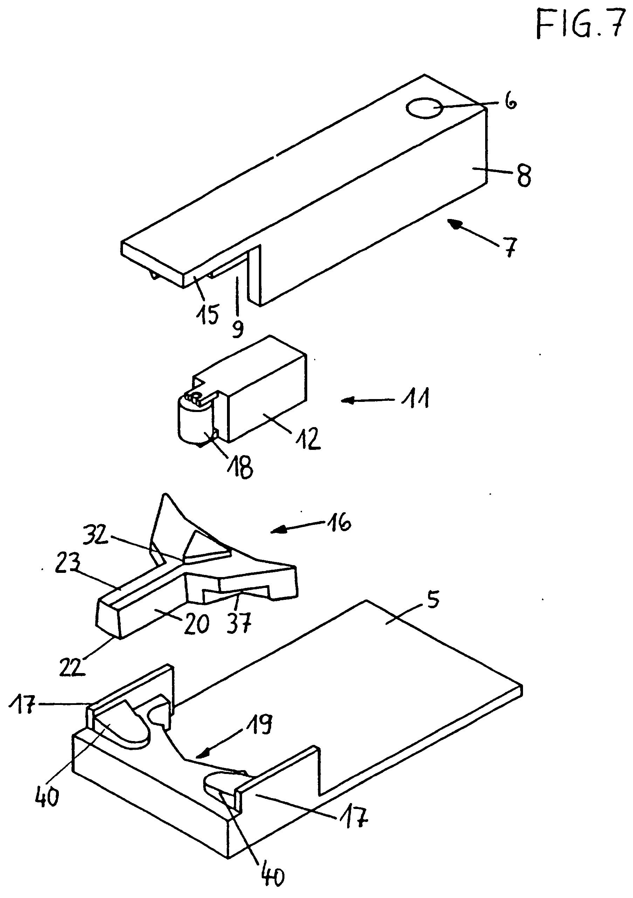

- Fig. 4 bis 7: Explosivdarstellungen des erfindungsgemäßen Kraftfahrzeug-Lenkstockschalters mit Fahrtrichtungsschalter und Blinkerschalthebel in verschiedenen Blickrichtungen,

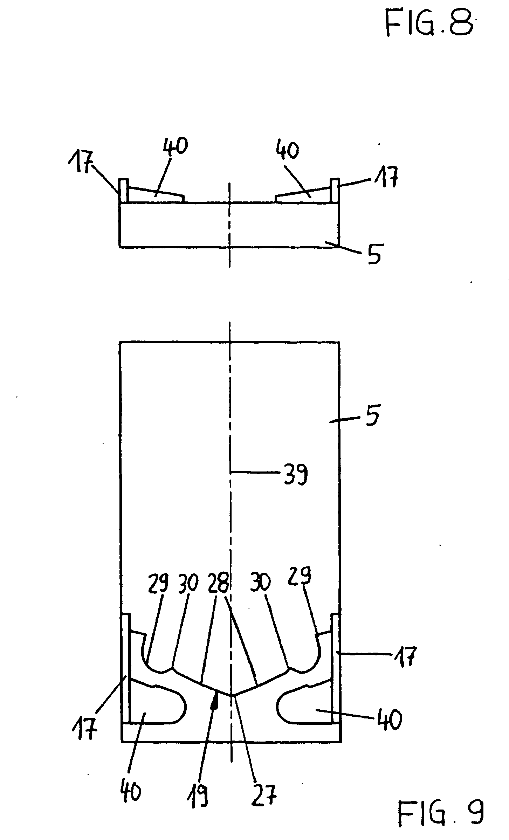

- Fig. 8: eine Vorderansicht des Schaltergehäuses,
- Fig. 9: eine Draufsicht des Schaltergehäuses nach Fig. 8,

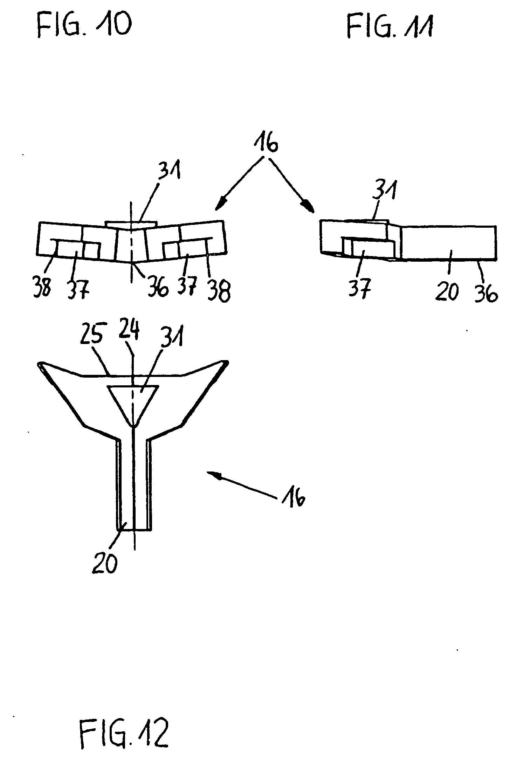

- Fig. 10: eine Vorderansicht des Auslösers,
- Fig. 11: eine Seitenansicht des Auslösers nach Fig. 10,

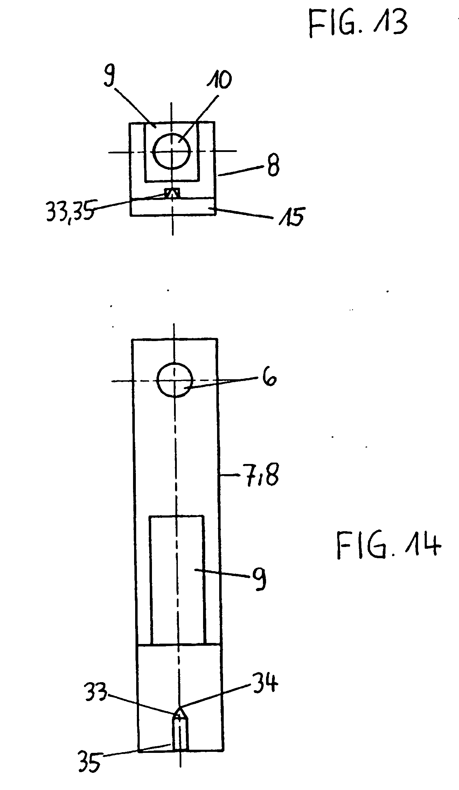

- Fig. 12: eine Draufsicht des Auslösers nach Fig. 10,
- Fig. 13: eine Rückansicht des Endabschnittes des Blinkerschalthebels und
- Fig. 14: eine Unteransicht des Endabschnittes des Blinkerschalthebels nach Fig. 13.

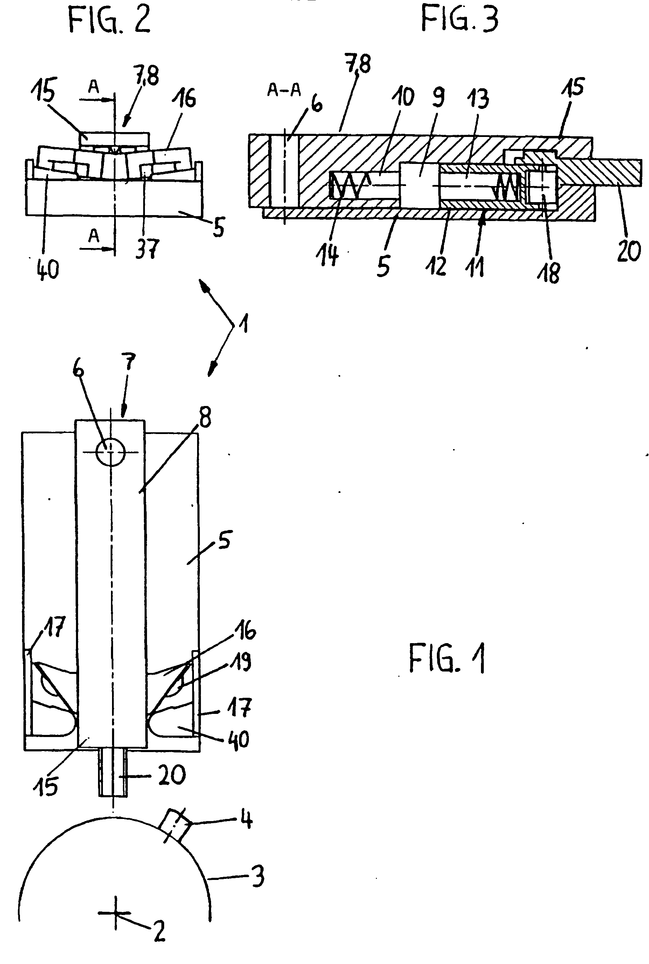

Der an einem nicht dargestellten Kraftfahrzeug-Lenkstockschalter befestigte Fahrtrichtungsschalter 1 ist gemäß Fig. 1 radial zur Längsachse 2 der schematisch dargestellten Lenksäule 3 angeordnet, welche an ihrem Außenumfang mit zumindest einem Nocken 4 versehen ist. Der Fahrtrichtungsschalter 1 umfaßt ein sockelartiges Schaltergehäuse 5, auf dem eine Drehachse 6 ausgebildet ist. Auf dieser Drehachse 6 ist ein Blinkerschalthebel 7 schwenkbar befestigt, wobei in den Zeichnungen nur der über die Drehachse 6 hinausragende Endabschnitt 8 des Blinkerschalthebels 7 dargestellt ist.

Der Endabschnitt 8 des Blinkerschalthebels 7 ist in dessen Längsrichtung mit einem Führungskanal 9 versehen, der in Richtung zur Drehachse 6 in eine Sackbohrung 10 übergeht. In den Führungskanal 9 ist gleitbeweglich ein als Rastelement 11 ausgebildeter Raststein 12 eingesetzt, der ebenfalls in dessen Längsrichtung mit einer Sachbohrung 13 versehen ist. Durch die sachbohrung 10 des Endabschnittes 8 des Blinkerschalthebels 7 bis hin zur Sachbohrung 13 Raststein 12 erstreckt sich eine sich an den jeweiligen Stirnwänden der Sachbohrungen 10 bzw. 13 abstützende Druckfeder 14. Das von der Drehachse 6 weggerichtete Ende des Endabschnittes 8 des Blinkerschalthebels 7 weist einen Vorsprung 15 auf, der in "AUS"-Stellung des Blinkerschalthebels 7 radial zur Lenksäule 3 ragt und dabei teilweise das Rastelement 11 und einen zwischen dem Vorsprung 15 und dem Schaltergehäuse 5 angeordneten Auslöser 16 überragt.

Das Schaltergehäuse 5 weist in seinem vorderen Bereich sich gegenüberliegende seitliche Begrenzungswände 17 auf, zwischen denen der Auslöser 16 bewegbar ist.

Der als Rastelement 11 ausgebildet Raststein 12 umfaßt eine Rastrolle 18, die am zur Lenksäule 3 gerichteten Ende des Raststeins 12 frei drehbar gelagert ist. Diese Rastrolle 18 befindet sowohl mit dem rückwärtigen Endes des Auslösers 16 als auch mit einer am Schaltergehäuse 5 ausgebildeten Rastkurvenbahn 19, die später erläutert wird, in Eingriff.

Am vorderen, in "AUS"-Stellung des Blinkerschalthebels 7 zur Lenksäule 3 gerichteten Ende des Auslösers 16 weist dieser einen verjüngten Abschnitt 20 auf, der auf einer Auflagefläche 21 des Schaltergehäuses 5 bewegbar ist. Dieser verjüngte Abschnitt 20 des Auslösers 16 ist zum Eingriff mit dem Nocken 4 der Lenksäule 3 vorgesehen. Die Unterseitenfläche 22 und die entgegengesetzte Oberseitenfläche 23 des verjüngten Abschnittes 30 des Auslösers 16 sind um dessen Längsachse jeweils leicht V-förmig abgewinkelt ausgebildet, so daß die Unterseitenfläche 22 und die Oberseitenfläche 23 parallel zueinander verlaufen. Der Auslöser 16 selbst weist eine im wesentlichen Y-Form auf.

An der rückseitigen Stirnwand 25 des Auslösers 16 ist eine Kurvenbahn 26 ausgebildet, die eine ungefähr V-förmige Grundform aufweist, wobei die Schenkel der V-Form einen ungleichmäßigen Verlauf haben. Diese Kurvenbahn 26 befindet sich mit der Rastrolle 18 des Rastelementes 11 in Eingriff. Dabei entspricht die Höhe der Kurvenbahn 26 etwa der halben Höhe der Rastrolle 18. Die andere halbe Höhe der Rastrolle 18 befindet sich ebenfalls mit der im Schaltergehäuse 5 ausgebildeten Rastkurvenbahn 19 in Eingriff, deren Höhe gleichfalls etwa der halben Höhe der Rastrolle 18 entspricht.

Die Rastkurvenbahn 19 unterteilt sich in einen mittleren Kurvenbahnbereich 27 für die "AUS"-Stellung des Blinkerschalthebels 7, sich beidseitig daran anschließende Kurvenbahnbereiche 28 für die Tippstellungen "Links" bzw. "Rechts" des Blinkerschalthebels 7 und sich wiederum daran anschließende äußere Kurvenbahnbereiche 29 für die Blinkerschalthebelstellungen "Links" bzw. "Rechts", welche zur Arretierung der Rastrolle 18 des Rastelementes 11 vorgesehen sind. Im Übergangsbereich von den Kurvenbahnbereichen 28 zu den Kurvenbahnbereichen 29 sind leichte Erhebungen 30 augebildet, so daß die Rastrolle 18 bei Betätigung des Blinkerschalthebels 7 einen gewissen fühlbaren Widerstand überwinden muß.

Am Auslöser 16 ist auf dessen Oberseite ein dreieckförmiges Gleitelement 31 erhaben ausgebildet, dessen Spitze 32 in Richtung des verjüngten Abschnittes 20 zeigt. Dazu korrespondierend weist der Vorsprung 15 des Endabschnittes 8 des Blinkerschalthebels 7 ein im wesentlichen dreieckförmiges Führungselement 33 auf , dessen Spitze 34 in "AUS"-Stellung des Blinkerschalthebels 7 zur Spitze 32 des Gleitelementes 31 des Auslösers 16 gerichtet ist. Bei Betätigung des Blinkerschalthebels 7 gleiten das Gleitelement 31 am Auslöser 16 und das Führungselement 33 am Endabschnitt 8 des Blinkerschalthebels 7 aneinander vorbei, so daß der Auslöser 16 in radialer Richtung zur Lenksäule 3 bewegt wird. Des weiteren ist das Führungselement 33 mit einem Nocken 35 für eine Kippbewegung des Auslösers 16 um dessen an der Unterseitenfläche 22 am verjüngten Abschnitt 20 gebildeten Kante 36 kippbar.

Seitlich des Auslösers 16 weist dieser jeweils eine Aussparung 37 auf, deren außeres Ende mit einer Erhöhung 38 versehen ist. Zu diesen Aussparungen 37 befinden sich, deckungsgleich angeordnet, beidseitig der Längsachse 39 des Schaltergehäuses 5 dazu geneigte Ansätze 40, die an die Begrenzungswände 17 des Schaltergehäuses 5 angrenzen. Diese Ansätze 40 befinden sich bei Betätigung des Blinkerschalthebels 7 mit den Aussparungen 37 im Auslöser 16 gleitbeweglich in Eingriff, wobei die Erhöhungen 38 an den Aussparungen 37 des Auslösers 16 an den Seitenwänden der Ansätze 40 des Schaltergehäuses 5 gleiten. Dadurch gelangt der Auslöser 16 in eine leicht gekippte Stellung um die Kante 36 an der Unterseitenfläche 22 des verjüngten Abschnittes 20.

Es versteht sich, daß die vorstehend genannten Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Liste der Bezugszeichen

- 1: Fahrtrichtungsanzeiger
- 2: Längsachse
- 3: Lenksäule
- 4: Nocken
- 5: Schaltergehäuse
- 6: Drehachse
- 7: Blinkerschalthebel
- 8: Endabschnitt
- 9: Führungskanal
- 10: Sackbohrung
- 11: Rastelement
- 12: Raststein
- 13: Sackbohrung
- 14: Druckfeder
- 15: Vorsprung
- 16: Auslöser
- 17: Begrenzungswand
- 18: Rastrolle
- 19: Rastkurvenbahn
- 20: verjüngter Abschnitt
- 21: Auflagefläche
- 22: Unterseitenfläche
- 23: Oberseitenfläche
- 24: Längsachse
- 25: Stirnwand
- 26: Kurvenbahn
- 27: Kurvenbahnbereich
- 28: Kurvenbahnbereich
- 29: Kurvenbahnbereich
- 30: Erhebung
- 31: Gleitelement
- 32: Spitze
- 33: Führungselement
- 34: Spitze
- 35: Nocken
- 36: Kante
- 37: Aussparung
- 38: Erhöhung
- 39: Längsachse
- 40: Ansatz

## Patentansprüche

1. Kraftfahrzeug-Lenkstockschalter mit einem Fahrtrichtungsschalter (1), dessen Blinkerschalthebel (7) um eine am Schaltergehäuse (5) des Fahrtrichtungsschalters (1) angeordnete Drehachse (6) schwenkbar ist und dessen gehäuseseitiger Endabschnitt (8) mit einen federbelasteten Rastelement (11) versehen ist, das mit einer am Schaltergehäuse (5) ausgebildeten Rastkurvenbahn (19) zusammenwirkt und sich mit einem am Schaltergehäuse (5) schwenkbar gelagerten Auslöser (16) mit einem zur Lenksäule (3) des Kraftfahrzeuges verjüngten Abschnitt (20) für die Rückstellung des Blinkerschalthebels (7) in Eingriff befindet,
**dadurch gekennzeichnet, daß** der Auslöser (16)
- eine Kurvenbahn (26), gegen die sich das federbelastete Rastelement (11) des Blinkerschalthebels (7) gleitbeweglich abstützt,
- ein Gleitelement (31), welches mit einem am Endabschnitt (8) des Blinkerschalthebels (7) ausgebildeten Führungselement (33) gleitbeweglich zusammenwirkt, und
- zwei zueinander beabstandete seitliche Aussparungen (37), die mit dazu korrespondierenden, am Schaltergehäuse (5) ausgebildeten Ansatzen (40) in Eingriff bringbar sind,
aufweist.

2. Kraftfahrzeug-Lenkstockschalter nach Anspruch 1, **dadurch gekennzeichnet, daß** das federbelastete Rastelement (11) als Rastrolle (18) ausgebildet ist.

3. Kraftfahrzeug-Lenkstockschalter nach Anspruch 2, **dadurch gekennzeichnet, daß** die Rastrolle (11) an einem gleitbeweglichen Raststein (12) angeordnet ist, der in einem im von der Drehachse (6) des Schaltergehäuses (5) hineinragenden Endabschnitt (8) des Blinkerschalthebels (7) ausgebildeten Führungskanal (9) geführt und durch eine darin angeordnete Druckfeder (14) gleitbeweglich belastet ist.

4. Kraftfahrzeug-Lenkstockschalter nach einem der Ansprüche 1 bis 3, **dadurch gekennzeichnet, daß** die am Schaltergehäuse (5) ausgebildet Rastkurvenbahn (19) einen mittleren Kurvenbahnbereich (27) für die "AUS"-Stellung, sich beidseitig an den mittleren Kurvenbahnbereichen (27) anschließende Kurvenbahnbereiche (28) für die Tippszellungen und sich daran anschließende, mit Erhebungen (30) versehene äußere Kurvenbahnbereiche (29) für die Blinkerschaltstellungen des Blinkerschalthebels (7) aufweist.

5. Kraftfahrzeug-Lenkstockschalter nach einem der Ansprüche 2 bis 4, **dadurch gekennzeichnet, daß** die Rastkurvenbahn (19) am Schaltergehäuse (5) eine Höhe aufweist, die etwa der halben Höhe der sich daran abstützenden Rastrolle (18) entspricht.

6. Kraftfahrzeug-Lenkstockschalter nach einem der Ansprüche 1 bis 5, **dadurch gekennzeichnet, daß** die am Auslöser (16) ausgebildete Kurvenbahn (26) an der von ihrem verjüngten Abschnitt (20) weggerichteten rückwärtigen Stirnwand (25) verläuft.

7. Kraftfahrzeug-Lenkstockschalter nach einem der Ansprüche 1 bis 6, **dadurch gekennzeichnet, daß** die Kurvenbahn (26) des Auslösers (16) im wesentlichen V-förmig und symmetrisch ausgebildet ist, wobei jeder Schenkel der V-Form einen ungleichförmigen Krümmungsverlauf aufweist.

8. Kraftfahrzeug-Lenkstockschalter nach einem der Ansprüche 2 bis 7, **dadurch gekennzeichnet, daß** die Kurvenbahn (26) des Auslösers (16) eine Höhe aufweist, die etwa der halben Höhe der sich daran abstützenden Rastrolle (18) entspricht.

9. Kraftfahrzeug-Lenkstockschalter nach einem der Ansprüche 1 bis 8, **dadurch gekennzeichnet, daß** das am Auslöser (16) ausgebildete Gleitelement (31) an dessen Oberseite nockenartig angeformt ist und eine im wesentlichen Dreieckform aufweist, wobei eine Spitze (32) der Dreieckform zum verjüngten Abschnitt (20) des Auslösers (16) gerichtet ist.

10. Kraftfahrzeug-Lenkstockschalter nach Anspruch 9, **dadurch gekennzeichnet, daß** das am Endabschnitt (8) des Blinkerschalthebels (7) ausgebildete Führungselement (33) an einem den Auslöser (16) zumindest teilweise überdeckenden Vorsprung (15) des Endabschnittes (8) des Blinkerschalthebels (7) nockenartig angeformt ist und eine im wesentlichen Dreieckform aufweist, wobei eine Spitze (34) der Dreieckform entgegengesetzt zur Spitze (32) der Dreieckform des am Auslöser (16) ausgebildeten Gleitelementes (31) gerichtet ist.

11. Kraftfahrzeug-Lenkstockschalter nach Anspruch 10, **dadurch gekennzeichnet, daß** sich in der "AUS"-Stellung des Blinkerschalthebels (7) die Spitzen (32,34) der Dreieckformen des nockenartigen Gleitelementes (31) und des Führungselementes (33) unmittelbar gegenuber befinden.

12. Kraftfahrzeug-Lenkstockschalter nach einem der Ansprüche 1 bis 11, **dadurch gekennzeichnet, daß** die am Schaltergehäuse (5) ausgebildeten Ansätze (40) jeweils zur Längsachse (39) des Schaltergehäuses (5) geneigt sind, um eine im wesentlichen V-Form zu bilden, wobei der verjüngte Abschnitt (20) des Auslösers (16) zwischen diesen Ansätzen (40) bewegbar ist.

13. Kraftfahrzeug-Lenkstockschalter nach einem der Ansprüche 1 bis 12, **dadurch gekennzeichnet, daß** die Unterseitenfläche (22) und die Oberseitenfläche (23) des verjüngten Abschnittes (20) des Auslösers (16) um dessen Längsachse (24) jeweils leicht V-förmig abgewinkelt ausgebildet sind, wobei die Unterseitenfläche (22) und die Oberseitenfläche (23) parallel zueinander verlaufen.

14. Kraftfahrzeug-Lenkstockschalter nach Anspruch 13, **dadurch gekennzeichnet, daß** durch die die abgewinkelte Unterseitenfläche (22) des verjüngten Abschnittes (20) des Auslösers (16) gebildete Kante (36) als Kippachse für den Auslöser (16) auf seiner Auflagefläche (21) am Schaltergehäuse (5) vorgesehen ist.

15. Kraftfahrzeug-Lenkstockschalter nach einem der Ansprüche 1 bis 14, **dadurch gekennzeichnet, daß** jede der äußeren Seitenkanten der Aussparungen (37) am Auslöser (16) eine nockenartige Erhöhung (38) aufweist.

16. Kraftfahrzeug-Lenkstockschalter nach einem der Ansprüche 1 bis 15, **dadurch gekennzeichnet, daß** das Schaltergehäuse (5) im Betätigungsbereich des Auslösers (16) jeweils eine äußere seitliche Begrenzungswand (17) aufweist.

## Claims

1. Motor vehicle steering column assembly switch having a travel direction switch (1) whose direction indicator control lever (7) is pivotable about an axis of rotation (6) arranged on the switch housing (5) of the travel direction switch (1) and whose end section (8) on the housing side is provided with a spring-loaded catch element (11) which acts in conjunction with a catch curved path (19) constructed on the switch housing (5)and is in engagement with a tripping device (16) mounted pivotably on the switch housing (5) and having a section (20) tapering towards the steering column (3) of the motor vehicle for resetting the indicator control lever (7), **characterised in that** the tripping device (16) has
- a curved path (26) against which the spring-loaded catch element (11) of the indicator control lever (7) is supported in sliding manner,
- a sliding element (31) which acts in sliding manner in conjunction with a guide element (33) constructed on the end section (8) of the indicator control lever (7), and
- two lateral recesses (37) spaced apart from one another which can be brought into engagement with shoulders (40) corresponding thereto constructed on the switch housing (5).

2. Motor vehicle steering column assembly switch according to claim 1, **characterised in that** the spring-loaded catch element (11) is constructed in the form of a catch roller (18).

3. Motor vehicle steering column assembly switch according to claim 2, **characterised in that** the catch roller (11) is arranged on a sliding catch block (12) which is guided in a guide channel (9) constructed in the end section (8) of the indicator control lever (7) projecting in from the axis of rotation (6) of the switch housing (5) and is loaded in sliding manner by a compression spring (14) arranged therein.

4. Motor vehicle steering column assembly switch according to any of claims 1 to 3, **characterised in that** the catch curved path (19) constructed on the switch housing (5) possesses a central curved path region (27) for the "OFF" position, curved path regions (28) for the touch positions adjoining the central curved path regions (27) on both sides and, adjacent thereto, outer curved path regions (29) provided with elevations (30) for the indicator switching positions of the indicator control lever (7).

5. Motor vehicle steering column assembly switch according to any of claims 2 to 4, **characterised in that** the catch curved path (19) on the switch housing (5) has a height corresponding to approximately half the height of the catch roller (18) supported thereon.

6. Motor vehicle steering column assembly switch according to any of claims 1 to 5, **characterised in that** the curved path (26) constructed on the tripping device (16) runs on the rearward end wall (25) directed away from its tapering section (20).

7. Motor vehicle steering column assembly switch according to any of claims 1 to 6, **characterised in that** the curved path (26) of the tripping device (16) is constructed substantially in the shape of a V and symmetrically, wherein each limb of the V shape has an irregular curved pattern.

8. Motor vehicle steering column assembly switch according to any of claims 2 to 7, **characterised in that** the curved path (26) of the tripping device (16) has a height corresponding to approximately half the height of the catch roller (18) supported thereon.

9. Motor vehicle steering column assembly switch according to any of claims 1 to 8, **characterised in that** the sliding element (31) constructed on the tripping device (16) is moulded in place like a cam on the upper side thereof and has a substantially triangular shape, wherein a tip (32) of the triangular shape is directed towards the tapering section (20) of the tripping device (16).

10. Motor vehicle steering column assembly switch according to claim 9, **characterised in that** the guide element (33) constructed on the end section (8) of the indicator control lever (7) is moulded in place like a cam on a projection (15) of the end section (8) of the indicator control lever (7) covering the tripping device (16) at least in part and has a substantially triangular shape, wherein a tip (34) of the triangular shape is directed opposite to the tip (32) of the triangular shape of the sliding element (31) constructed on the tripping device (16).

11. Motor vehicle steering column assembly switch according to claim 10, **characterised in that** in the "OFF" position of the indicator control lever (7) the tips (32, 34) of the triangular shapes of the cam-like sliding element (31) and the guide element (33) are located directly opposite one another.

12. Motor vehicle steering column assembly switch according to any of claims 1 to 11, **characterised in that** the shoulders (40) constructed on the switch housing (5) are each inclined to the longitudinal axis (39) of the switch housing (5) to form a substantially V shape, wherein the tapering section (20) of the tripping device (16) is movable between these shoulders (40).

13. Motor vehicle steering column assembly switch according to any of claims 1 to 12, **characterised in that** the underside surface (22) and the upper side surface (23) of the tapering section (20) of the tripping device (16) are each constructed about the longitudinal axis thereof bent slightly in the shape of a V, wherein the underside surface (22) and the upper side surface (23) run parallel to one another.

14. Motor vehicle steering column assembly switch according to claim 13, **characterised in that** the edge (36) formed by the bent underside surface (22) of the tapering section (20) of the tripping device (16) is provided as a tilting axis for the tripping device (16) on its support face (21) on the switch housing (5).

15. Motor vehicle steering column assembly switch according to any of claims 1 to 14, **characterised in that** each of the outer lateral edges of the recesses (37) on the tripping device (16) possesses a cam-like elevation (38).

16. Motor vehicle steering column assembly switch according to any of claims 1 to 15, **characterised in that** in the actuating range of the tripping device (16) the switch housing (5) has an outer boundary wall (17) on each side.

## Revendications

1. Commutateur de colonne de direction d'un véhicule automobile avec un commutateur de direction de marche (1), dont le levier de commande des clignotants (7) peut pivoter autour d'un axe de rotation (6) disposé sur le boîtier (5) du commutateur de direction de marche (1) et dont le segment terminal (8) côté boîtier est pourvu d'un élément d'encliquetage (11) soumis à la force d'un ressort et qui coopère avec une voie courbée d'encliquetage (19) réalisée sur le boîtier de commutateur (5) et se trouve en prise avec un déclencheur (16), monté pivotant sur le boîtier de commutateur (5) présentant un segment (20) rétréci vers la colonne de direction (3) du véhicule automobile, pour le replacement du levier de commande des clignotants (7),
**caractérisé en ce que** le déclencheur (16) comporte
- une voie courbée (26) contre laquelle prend appui, de façon mobile en glissement, l'élément d'encliquetage (11) soumis à la force d'un ressort du levier de commande des clignotants (7),
- un coulisseau (31) qui coopère de façon mobile en glissement avec un élément de guidage (33) réalisé sur le segment terminal (8) du levier de commande des clignotants (7), et
- deux découpes (37) latérales espacées l'une de l'autre qui peuvent être amenées en prise avec des appendices (40), correspondant à celles-ci, réalisés sur le boîtier de commutateur (5).

2. Commutateur de colonne de direction d'un véhicule automobile selon la revendication 1, **caractérisé en ce que** l'élément d'encliquetage (11) soumis à la force d'un ressort est réalisé sous la forme d'un galet d'encliquetage (18).

3. Commutateur de colonne de direction d'un véhicule automobile selon la revendication 2, **caractérisé en ce que** le galet d'encliquetage (11) est disposé sur un bloc d'encliquetage (12) mobile à glissement qui est guidé dans un canal de guidage (9) réalisé dans le segment terminal (8), pénétrant à l'intérieur depuis l'axe de rotation (6) du boîtier de commutateur (5), du levier de commande des clignotants (7), et qui est sollicité à glissement par un ressort de pression (14) disposé à l'intérieur de celui-ci.

4. Commutateur de colonne de direction d'un véhicule automobile selon l'une des revendications 1 à 3, **caractérisé en ce que** la voie courbée d'encliquetage (19), réalisée sur le boîtier de commutateur (5), présente une zone de voie courbée centrale (27) pour la position "ARRET", des zones de voie courbée (28) se raccordant des deux côtés aux zones centrales de voie courbée (27) pour les positions de la touche à impulsion, ainsi que des zones extérieures de voie courbée (29) s'y raccordant et pourvues de reliefs (30), pour les positions de commande des clignotants du levier de commande des clignotants (7).

5. Commutateur de colonne de direction d'un véhicule automobile selon l'une des revendications 2 à 4, **caractérisé en ce que** la voie courbée d'encliquetage (19) sur le boîtier de commutateur (5) présente une hauteur qui correspond approximativement à la moitié de la hauteur du galet d'encliquetage (18) prenant appui contre celle-ci.

6. Commutateur de colonne de direction d'un véhicule automobile selon l'une des revendications 1 à 5, **caractérisé en ce que** la piste courbée (26) réalisée sur le déclencheur (16) s'étend sur la paroi frontale arrière (25) s'éloignant de son segment (20) rétréci.

7. Commutateur de colonne de direction d'un véhicule automobile selon l'une des revendications 1 à 6, **caractérisé en ce que** la voie courbée (26) du déclencheur (16) est réalisée sensiblement en forme de V et symétrique, chaque branche du V présentant une allure non uniforme de la courbure.

8. Commutateur de colonne de direction d'un véhicule automobile selon l'une des revendications 2 à 7, **caractérisé en ce que** la voie courbée (26) du déclencheur (16) présente une hauteur qui correspond approximativement à la moitié de la hauteur du galet d'encliquetage (18) y prenant appui.

9. Commutateur de colonne de direction d'un véhicule automobile selon l'une des revendications 1 à 8, **caractérisé en ce que** le coulisseau (31) réalisé sur le déclencheur (16) est formé sur sa face supérieure à la manière d'une came et présente une forme sensiblement triangulaire, un sommet (32) de la forme triangulaire étant dirigé vers le segment rétréci (20) du déclencheur (16).

10. Commutateur de colonne de direction d'un véhicule automobile selon la revendication 9, **caractérisé en ce que** l'élément de guidage (33), réalisé sur le segment terminal (8) du levier de commande des clignotants (7), est formé à la manière d'une came sur une saillie (15), recouvrant au moins partiellement le déclencheur (16), du segment terminal (8) du levier de commande des clignotants (7), et présente une forme sensiblement triangulaire, un sommet (34) de la forme triangulaire étant dirigé à l'opposé du sommet (32) de la forme triangulaire du coulisseau (31) réalisé sur le déclencheur (16).

11. Commutateur de colonne de direction d'un véhicule automobile selon la revendication 10, **caractérisé en ce que** dans la position "ARRET" du levier de commande des clignotants (7), les sommets (32, 34) des formes triangulaires du coulisseau (31) de type came et de l'élément de guidage (33) se trouvent directement en vis-à-vis.

12. Commutateur de colonne de direction d'un véhicule automobile selon l'une des revendications 1 à 11, **caractérisé en ce que** les appendices (40), réalisés sur le boîtier de commutateur (5), sont inclinés chacun par rapport à l'axe longitudinal (32) du boîtier de commutateur (5), afin de former sensiblement un V, le segment rétréci (20) du déclencheur (16) étant déplaçable entre ces appendices (40).

13. Commutateur de colonne de direction d'un véhicule automobile selon l'une des revendications 1 à 12, **caractérisé en ce que** la surface de face inférieure (22) et la surface de face supérieure (23) du segment rétréci (20) du déclencheur (16) sont réalisées chacune légèrement coudées en V, autour de son axe longitudinal (24), la surface de face inférieure (22) et la surface de face supérieure (23) s'étendant parallèlement l'une à l'autre.

14. Commutateur de colonne de direction d'un véhicule automobile selon la revendication 13, **caractérisé en ce que** l'arête (36) formée par la surface de face inférieure (22) coudée du segment rétréci (20) du déclencheur (16), est prévue comme axe de basculement pour le déclencheur (16) sur sa surface d'appui (21) sur le boîtier de commutateur (5).

15. Commutateur de colonne de direction d'un véhicule automobile selon l'une des revendications 1 à 14, **caractérisé en ce que** chacune des arêtes latérales extérieures des découpes (37) sur le déclencheur (16) présente un relief (38) de type came.

16. Commutateur de colonne de direction d'un véhicule automobile selon l'une des revendications 1 à 15, **caractérisé en ce que** le boîtier de commutateur (5) présente, dans la zone d'actionnement du déclencheur (16), une paroi de délimitation (17) latérale extérieure respective.
